# EUROPEAN PATENT SPECIFICATION

(11) **EP 1 688 507 B1**
(45) Date of publication and mention of the grant of the patent: **10.12.2008**
(21) Application number: 06001480.0
(22) Date of filing: 25.01.2006
(51) Int. Cl.: C21D 9/02, C21D 8/00, F16D 13/64, F16F 1/32

(54) **Clutch driven plate and its manufacturing method**
Kupplungsscheibe und deren Herstellungsmethode
Disque d'embrayage et son procédé de fabrication

(30) Priority: 03.02.2005 GB 0502212
(43) Date of publication of application: 09.08.2006
(73) Proprietor: Automotive Products S.p.A., Spontini, Ancona (IT)
(72) Inventor: Caracini, Pietro, Spontini 60030 Ancona (IT); Ribichini, Andrea, Castelbellino 60030 Ancona (IT); Gallagher, Paul Andrew, Monsano 60030 Ancona (IT)
(74) Representative: Morrall, Roger

(56) References cited:
- DE-A1- 19 541 877
- FR-A- 2 746 111
- US-A- 4 039 354
- US-A- 4 832 764

## Description

This invention relates to clutches and in particular to the manufacture of clutch driven plates (see DE-A-19541877). Such driven plates, hereinafter referred to as being of the type described, include an annular steel disc which carries friction elements on either side of its outer peripheral zone and is connected at its inner periphery with a drive hub (often via a spring and friction damping arrangement), the outer peripheral zone is formed into a series of axial corrugated resilient segments which provide axial cushioning when the driven plate is clamped between a pressure plate and an associated engine flywheel when the clutch is engaged to provide a smoother take-up of drive. Such driven plate constructions are well known.

The manufacture of such driven plates is a relatively costly and time consuming operation since the steel segmented disc which supports the friction elements requires detailed shaping and heat treatment to achieve the desired shape and long term resilience.

It is an object of the present invention to provide an improved method of manufacture of a segmented disc for use in a driven plate of the type described.

Thus according to the present invention there is provided a method of manufacturing a segmented disc for a clutch driven plate, the segmented disc having an outer peripheral zone formed as a series of axially corrugated resilient segments for the resilient support of clutch friction elements on either side thereof, the method being characterised by comprising the steps of:-
- blanking out the disc to its final segmented form;
- positioning the blanked disc on a support fixture;
- positioning electrical induction heating means adjacent the segmented portion of the blanked disc and heating the segmented portion using the induction electrical heating means to the austenitic temperature;
- removing the induction heating means from the blanked disc;
- crimping the segmented portion of the disc between crimping dies to provide the axially corrugated form;
- quenching the segmented portion of the disc to modify the carbon structure of the segmented portion (partially to martensite and sorbite) to increase its hardness;
- and reheating the segmented portion of the disc to temper the segmented portion.

This method enables a segmented disc to be produced in a shorter production time and at a lower cost since the disc does not need to be moved form the support fixture once positioned there. Also no metal forming is carried out after the heat treatment steps.

Preferably, the re-heating for tempering is carried out by the electrical induction heating means.

Alternatively, the re-heating for tempering carried out by further heating means (e.g. by placing in a furnace).

The quenching is preferably achieved by passing cooling fluid through cavities in the crimping dies.

The electrical induction heating means may be moved radially and/or axially towards and away from the segmented portion of the disc for the heating and re-heating portions of the method.

The present invention also provides a clutch driven plate which includes a segmented disc produced by the above method and an apparatus for carrying out the above method.

Such an apparatus comprises a support fixture on which the blanked disc is placed, electrical induction heating means moveable between a heating position adjacent the segmented portion of the blanked disc and a retracted position clear of the blanked disc, and crimping dies moveable towards the segmented portion of the blanked disc to crimp the disc therebetween when the heating means is in its retracted position, the crimping dies including internal cooling cavities to enable the quenching process to be carried out.

The present invention will now be described, by way of example only, with reference to the accompanying drawings in which:-
Figure 1 shows a plan view of a clutch driven plate which includes a segmented disc manufactured by the method of the present invention;
Figure 2 shows a section on the line A-A of figure 1;
Figure 3 shows the blank from which the segmented disc is formed, and
Figures 4 and 5 show diagrammatically vertical sections through an apparatus for carrying out the method of the present invention.

Referring to the drawings, the clutch driven plate 10 comprises a central drive hub 11, a surrounding so-called compound damping centre 12 and an outer support disc 13 sandwiched between a pair of friction members 14a and 14b.

As is conventional, the compound centre includes inner idle rattle damping springs 15 and outer main damping springs 16. Outer main springs 16 act between central plate 17 and side plates 18 which are rivetted together at 19. Rivets 19 also secure support disc 13 to the side plates 18. The compound centre also includes a frictional damping means 12a to resist circumferential movement between support member 13 and hub 11.

Since the precise details of the compound damping centre 12 form no part of the present invention and any suitable form of damping centre may be employed no further details will be given. The invention is also applicable to driven plates with single stage torsional damping or even no torsional damping at all.

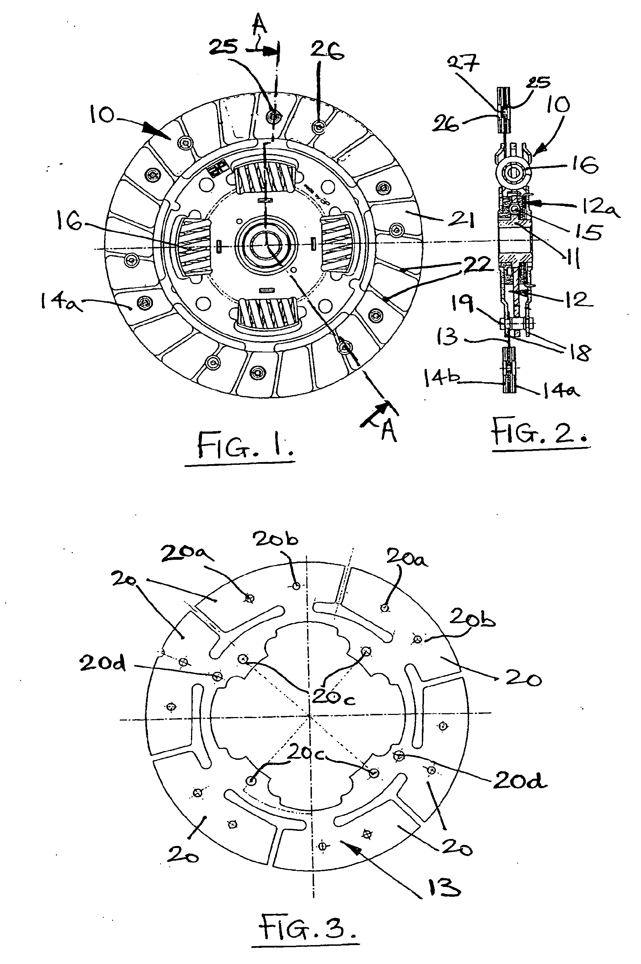

The support disc 13 is of annular form as is most clearly seen in Figure 3. The outer portion of the support disc is divided into a series of circumferentially spaced segments 20 which are axially corrugated and can move in an axial sense independently of each other and which support the two friction members 14a, 14b therefrom.

Both friction members 14a and 14b are of annular form. The outer frictional engaging surface of each friction member is formed as a series of circumferentially spaced pads 21 separated by grooves 22 (see figure 1). Alternatively the friction engaging surface can be of flat form without grooves 22.

The support member 13 includes series of outer rivet holes 20a, 20b for securing the friction members 14a, 14b in position as will be described. Also inner rivet holes 20c are provided through which rivets 19 extend and locating holes 20d which are used during manufacture of the driven plate. Friction members 14a, 14b include circumferentially alternating holes 25 and 26 (see figures 1 and 2). Holes 25 are counter sunk and receive rivets 27 which secure the relevant friction member to the support member 13. Holes 26 provide clearance for the ends of the rivets 27 which secure the other friction member to the support member 13.

When the clutch is engaged and the driven plate is compressed between a pressure plate and a flywheel the axial corrugations of the segments 20 are compressed to provide axial cushioning of the clutch engagement in the known manner.

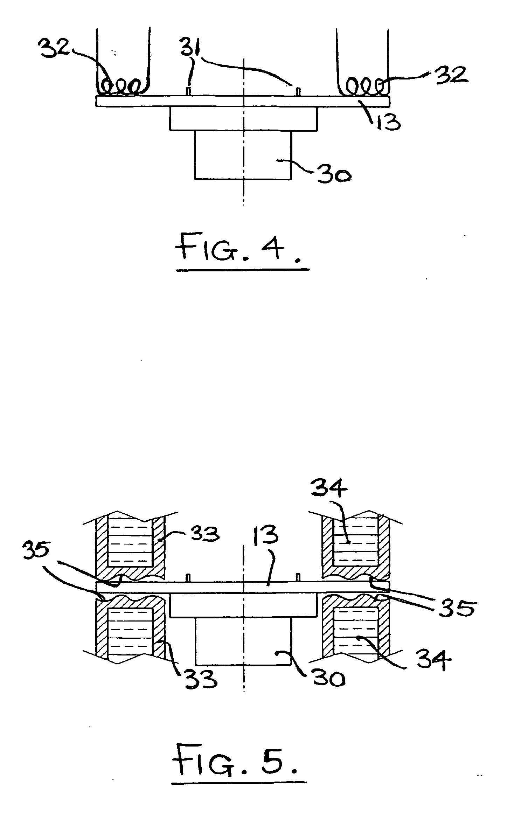

In accordance with the present invention the segmented disc 13 is manufactured by a method which comprises the following steps:-
- blanking out the disc 13 to the flat finished form shown in figure 3 which includes all the holes 20a, 20b, 20c and 20d and the fully defined segments 20;
- positioning the blanked disc 13 on a support fixture 30 (see figure 4) on which the blank is located by locating pins 31 which extend through locating holes 20d in the blanked disc,
- positioning electrical induction heating coils (32) adjacent the segmented portion 20 of the blanked disc and heating the segmented portion using the coils to the austenitic temperature (this modifies its carbon structure to increase its resilience);
- removing the induction heating coils from the blanked disc;
- crimping the segmented portion 20 of the disc between crimping dies (33) to give the segments 20 their axially corrugated form;
- quenching the segmented portion 20 of the disc to modify the carbon structure of the segmented portion (partially to martensite and sorbite) to increase its hardness;
- and reheating the segmented portion 20 of the disc to temper the segmented portion

When carrying out the above method the electrical induction heating coils 32 may be moved into and out of their operational position over the segmented portion 20 of the disc 13 by radial and/or axial movement. Similarly the crimping dies 33 may be moved into and out of their operational position on either side of the disc 13 by radial and/or axial movement.

The reheating of the disc for the tempering operation may be carried out using the heating coils 32 or by removing the disc 13 from the support structure 30 and placing the disc in a furnace.

The quenching is achieved by passing cooling fluid (e.g. water) through cavities 34 formed in the crimping dies 33. As can be seen from figure 5, the crimping dies have a corrugated crimping surface 35 which gives segments 20 of the disc their axial corrugation.

The initial heating of the blanked disc is timed to ensure that the carbon structure of the segments 20 of the disc 13 changes from a ferrite form to an austenitic form to increase the resilience of the segments 20. Similarly during the quenching phase of the method the quenching is timed to ensure that the carbon structure of the segments 20 changes to martensite and sorbite to increase the hardness of the segments. Experience shows that there is a transition area between the outer segments 20 and the radially inner area containing the holes 20c where the hardness of the disc 13 is even lower than the hardness of the radially inner area.

The present invention thus provides a method of manufacturing a segment disc for a clutch driven plate of the type described which is particularly suited to automatic assembly of the driven plate, which is economic (particularly in the heat used), and which gives good control of the heat treatment of the disc and the accuracy of the dimensions and physical properties of the disc.

## Claims

1. A method of manufacturing a steel segmented disc (13) for a clutch driven plate (10), the segmented disc having an outer peripheral zone formed as a series of axially corrugated resilient segments (20) for the resilient support of clutch friction elements (14a,14b) on either side thereof, the method being **characterised by** comprising the steps of :-
- blanking out the disc (13) to its final segmented form;
- positioning the blanked disc on a support fixture (30);
- positioning electrical induction heating means (32) adjacent the segmented portion (20) of the blanked disc and heating the segmented portion using the induction electrical heating means to the austenitic temperature;
- removing the induction heating means (32)from the blanked disc (20);
- crimping the segmented portion (20) of the disc between crimping dies (33) to provide the axially corrugated form;
- quenching (34) the segmented portion (20) of the disc to modify the carbon structure of the segmented portion (partially to martensite and sorbite) to increase its hardness;
- and reheating the segmented portion (20) of the disc to temper the segmented portion.

2. A method according to claim 1 in which the re-heating for tempering is carried out by the electrical induction heating means (32).

3. A method according to claim 1 in which the re-heating for tempering carried out by a further heating means (e.g. by placing in a furnace).

4. A method according to any one of claims 1 to 3 in which the quenching is achieved by passing cooling fluid through cavities (34) in the crimping dies (32).

5. A method according to any one of claims 1 to 4 in which the electrical induction heating means (32) is moved radially and/or axially towards and away from the segmented portion of the disc for the heating and re-heating portions of the method.

6. A clutch driven plate (10) which includes a segmented disc (20) manufactured by a method according to any one of claims 1 to 5.

7. An apparatus for carrying out the method of any one of claims 1 to 5, the apparatus being **characterised by** comprising a support fixture (30) on which the blanked disc is placed, electrical induction heating means (32) moveable between a heating position adjacent the segmented portion (20) of the blanked disc (13) and a retracted position clear of the blanked disc, and crimping dies (33) moveable towards the segmented portion (20) of the blanked disc to crimp the disc therebetween when the heating means is in its retracted position, the crimping dies including internal cooling cavities (34) to enable the quenching process to be carried out.

## Patentansprüche

1. Verfahren zum Herstellen einer segmentierten Stahlscheibe (13) für eine angetriebene Kupplungsscheibe (10), wobei die segmentierte Scheibe eine äußere Randzone hat, die in Form von einer Reihe von axial geriffelten elastischen Segmenten (20) für die elastische Abstützung von Kupplungsreibungselementen (14a, 14b) auf jeder Seite von ihr ausgebildet ist, wobei das Verfahren **dadurch gekennzeichnet ist, dass** es die Schritte aufweist: -
- Ausschneiden der Scheibe (13) zu ihrer endgültigen segmentierten Form;
- Positionieren der ausgeschnittenen Scheibe auf einer Tragvorrichtung (30);
- Positionieren von einer elektroinduktiven Heizeinrichtung (32) angrenzend an den segmentierten Teil (20) der ausgeschnittenen Scheibe und Erhitzen des segmentierten Teils unter Verwendung der induktiven elektrischen Heizeinrichtung auf die austenitische Temperatur;
- Entfernen der induktiven Heizeinrichtung (32) von der ausgeschnittenen Scheibe (20);
- Sicken des segmentierten Teiles (20) der Scheibe zwischen Sickenformwerkzeugen (33), um die axial geriffelte Form zu liefern;
- Abschrecken (34) des segmentierten Teiles (20) der Scheibe, um die Kohlenstoffstruktur des segmentierten Teiles zu ändern (teilweise zu Martensit und Sorbit), um seine Härte zu erhöhen;
- und Wiedererhitzen des segmentierten Teiles (20) der Scheibe, um den segmentierten Teil anzulassen.

2. Verfahren nach Anspruch 1, bei dem das Wiedererhitzen zum Anlassen mit der elektroinduktiven Heizeinrichtung (32) durchgeführt wird.

3. Verfahren nach Anspruch 1, bei dem das Wiedererhitzen zum Anlassen mit einer weiteren Heizeinrichtung (z.B. durch Anordnen in einem Ofen) durchgeführt wird.

4. Verfahren nach irgendeinem der Ansprüche 1 bis 3, bei dem das Abschrecken durch Führen eines Kühlmittels durch Hohlräume (34) in den Sickenformwerkzeugen (32) erzielt wird.

5. Verfahren nach irgendeinem der Ansprüche 1 bis 4, bei dem die elektroinduktive Heizeinrichtung (32) radial und/oder axial hin zu und weg von dem segmentierten Teil der Scheibe für die Erhitzungs- und Wiedererhitzungsabschnitte des Verfahrens bewegt wird.

6. Angetriebene Kupplungsscheibe (10), die eine segmentierte Scheibe (20) enthält, die durch ein Verfahren gemäß irgendeinem der Ansprüche 1 bis 5 hergestellt worden ist.

7. Vorrichtung zum Durchführen des Verfahrens nach irgendeinem der Ansprüche 1 bis 5, wobei die Vorrichtung **dadurch gekennzeichnet ist, dass** sie eine Tragvorrichtung (30), auf der die ausgeschnittene Scheibe platziert wird, eine elektroinduktive Heizeinrichtung (32), die zwischen einer an den segmentierten Teil (20) der ausgeschnittenen Scheibe (30) angrenzenden Heizposition und einer von der ausgeschnittenen Scheibe entfernten zurückgezogenen Position bewegbar ist, und Sickenformwerkzeuge (33) aufweist, die zu dem segmentierten Teil (20) der ausgeschnittenen Scheibe hin bewegbar sind, um die Scheibe zwischen ihnen zu sicken, wenn die Heizeinrichtung in ihrer zurückgezogenen Position ist, wobei die Sickenformwerkzeuge innere Kühlhohlräume (34) enthalten, damit das Abschreckverfahren ausgeführt werden kann.

## Revendications

1. Procédé de fabrication d'un disque segmenté en acier (13) pour plateau d'embrayage (10), le disque segmenté présentant une zone périphérique externe formant une série de segments élastiques axialement ondulés (20), destinés au support élastique d'éléments de friction d'embrayage (14a, 14b) sur chacun de ses côtés, procédé **caractérisé par** les étapes consistant à :
- découper à la presse le disque (13) selon sa forme segmentée finale ;
- positionner le disque découpé sur un bâti de support (30) ;
- positionner un moyen de chauffage par induction électrique (32) à côté de la partie segmentée (20) du disque découpé, et chauffer la partie segmentée à l'aide du moyen de chauffage par induction électrique jusqu'à la température austénitique ;
- retirer le moyen de chauffage par induction (32) du disque découpé (20) ;
- sertir la partie segmentée (20) du disque entre des matrices de sertissage (33) pour réaliser la forme axialement ondulée ;
- tremper (34) la partie segmentée (20) du disque pour transformer la structure du carbone de la partie segmentée (partiellement en martensite et sorbite) afin d'augmenter sa dureté ;
- et réchauffer la partie segmentée (20) du disque pour la faire revenir.

2. Procédé selon la revendication 1, dans lequel le réchauffage de revenu est effectué par le moyen de chauffage par induction électrique (32).

3. Procédé selon la revendication 1, dans lequel le réchauffage de revenu est effectué par un moyen de chauffage supplémentaire (par exemple en le plaçant dans un four).

4. Procédé selon l'une quelconque des revendications 1 à 3, dans lequel le sertissage s'effectue en faisant passer un liquide de refroidissement à travers des cavités (34) ménagées dans les matrices de sertissage (32).

5. Procédé selon l'une quelconque des revendications 1 à 4, dans lequel le moyen de chauffage par induction électrique (32) est déplacé dans le sens radial et/ou axial, en direction ou en provenance de la partie segmentée du disque, pour les étapes de chauffage et de réchauffage du procédé.

6. Plateau d'embrayage (10) comprenant un disque segmenté (20) fabriqué par un procédé selon l'une quelconque des revendications 1 à 5.

7. Appareil de mise en oeuvre du procédé selon l'une quelconque des revendications 1 à 5, appareil **caractérisé en ce qu'**il comprend un bâti de support (30) sur lequel est placé le disque découpé à la presse, un moyen de chauffage par induction électrique (32) mobile entre une position de chauffage, adjacente à la partie segmentée (20) du disque découpé (13), et une position de retrait distante du disque découpé, et des matrices de sertissage (33) mobiles en direction de la partie segmentée (20) du disque découpé, afin de sertir le disque entre elles lorsque le moyen de chauffage se trouve en position de retrait, les matrices de sertissage comprenant des cavités internes de refroidissement (34) permettant la mise en oeuvre du processus de trempe.
